# FASCICULE DE BREVET EUROPEEN

(11) **EP 2 790 843 B1**
(45) Date de publication et mention de la délivrance du brevet: **16.09.2015**
(21) Numéro de dépôt: 12787806.4
(22) Date de dépôt: 23.10.2012
(51) Int. Cl.: B07C 3/06, B65H 29/58

(54) **MACHINE DE TRI POSTAL POUR OBJETS PLATS AVEC VOLET DE SÉPARATION**
POSTSORTIERMASCHINE FÜR FLACHE GEGENSTÄNDE MIT EINER TRENNUNGSKLAPPE
MAIL SORTING MACHINE FOR FLAT OBJECTS, HAVING A SEPARATING FLAP

(30) Priorité: 13.12.2011 FR 1161560
(43) Date de publication de la demande: 22.10.2014
(73) Titulaire: Solystic, 92220 Bagneux (FR)
(72) Inventeur: DE SOUSA, Olivier, F-26120 Montmeyran (FR); DELBE, Emmanuel, F-07500 Guilherand Granges (FR); BERLIET, Damien, F-26500 Bourg Les Valence (FR); AGIER, François, F-26500 Bourg Les Valence (FR)
(74) Mandataire: Prugneau, Philippe
(86) Numéro de dépôt international: PCT/FR2012/052424
(87) Numéro de publication internationale: WO 2013/088008

(56) Documents cités:
- EP-A1- 2 206 564
- WO-A1-98/10876
- JP-A- 59 048 352

## Description

### Domaine technique

L'invention concerne de façon générale une machine de tri postal pour objets plats sur chant comprenant un bâti portant au moins des premiers moyens de convoyage à courroie aptes à transporter les objets plats selon une première trajectoire, au moins un volet de séparation mobile autour d'un axe de pivotement entre une première position dans laquelle il n'interfère pas avec la première trajectoire et une seconde position dans laquelle il coupe la première trajectoire de sorte à diriger les objets plats selon une seconde trajectoire (cF EP-A-2 206 564).

Au sens de l'invention, un objet plat désigne notamment, mais non exclusivement, un envoi postal. Les envois postaux, susceptibles d'être triés grâce à la machine de tri postal de l'invention, peuvent présenter des dimensions variables, mais également des caractéristiques mécaniques variables, en particulier en ce qui concerne leur rigidité. Ces envois postaux peuvent être, entre autres, une lettre simple, un magazine, une enveloppe avec ou sans fenêtre, un journal, ou encore un catalogue présenté dans une enveloppe en matière plastique ou en papier, avec ou sans soufflet.

### Technique antérieure

De manière connue, une telle machine de tri postal comprend une entrée d'alimentation avec un magasin d'objets plats, ainsi qu'un dépileur pour la mise en série sur chant des objets plats qui sont ensuite convoyés vers un système d'acquisition d'adresse, puis dirigés par un volet de séparation vers des sorties de tri alignées les unes à côté des autres, lesquelles sont notamment équipées d'empileurs. De façon classique, un volet de séparation, tel que celui visé par l'invention, est placé immédiatement en amont de l'empileur de la sortie de tri correspondante. Toutefois, le volet de séparation selon l'invention peut être placé à d'autres endroits de la machine de tri, notamment si cette dernière possède plusieurs zones de sortie les unes situées au-dessous des autres. Dans ce cas, ce volet de séparation permet de diriger les objets plats vers l'une ou l'autre de ces zones de sortie superposées.

La publication US 6,533,271 décrit une machine de tri d'objets plats comportant quatre courroies disposées dans des plans parallèles, dont une première et une seconde courroie se faisant face dans la partie amont du volet de séparation pour transporter par pincement, selon une trajectoire principale, les objets plats. Les première et seconde courroies s'éloignent l'une de l'autre, en amont de la bifurcation matérialisée par une poulie de bifurcation, de sorte à permettre de loger entre elles, une troisième courroie disposée en regard de la première courroie pour permettre le transport par pincement entre les première et troisième courroies des objets plats selon la trajectoire principale, et une quatrième courroie disposée en regard de la seconde courroie pour permettre le transport par pincement des objets plats entre les quatrième et seconde courroies selon une trajectoire secondaire différente de la trajectoire principale. Le volet de séparation est de type double et pivotant par rapport à l'axe de la poulie de bifurcation pour, par exemple, orienter les objets plats vers des sorties de tri. Ce double volet de séparation est orienté de sorte que son axe de pivotement soit en amont du battant dans le sens de convoyage des objets plats. Ce double volet de séparation est formé par deux palettes prévues de part et d'autre du trajet des objets plats, dans des plans perpendiculaires au sens de déplacement des objets plats. Le pivotement de ce volet de séparation permet d'orienter les objets plats, en aval à la bifurcation, soit selon la trajectoire principale, soit selon la trajectoire secondaire. La configuration du volet de séparation dont l'extrémité libre du battant est proche des quatre courroies accentue les risques de bourrage d'objets plats. De plus, le battant étant situé à l'aval de l'axe de pivotement, le volet de séparation peut difficilement contrer l'inertie des objets plats lourds, il risque ainsi de se faire entrainer à pivoter et d'autoriser le transport de certains objets plats dans la mauvaise trajectoire. Enfin, l'axe de pivotement du volet pivotant est nécessairement éloigné de la trajectoire des objets plats ce qui augmente les risques de bourrage. De plus, ce volet de séparation n'autorise pas l'utilisation de courroie de pied recevant le chant des objets plats transportés et fiabilisant leur transport.

On connait par ailleurs, de la publication US 2011/0 203 903, une machine de tri d'objets plats, sensiblement similaire à la précédente. Elle s'en différencie notamment par son volet de séparation dont le battant simple est orienté vers l'aval des courroies, le battant étant ainsi disposé en amont de l'axe de pivotement par rapport au sens de convoyage des objets plats. De plus, le volet de séparation porte l'axe d'une poulie guidant la troisième courroie, cet axe de poulie étant décalé par rapport à l'axe de pivotement du volet de séparation vers l'extrémité libre du battant. Ainsi, lorsque le volet de séparation pivote pour diriger un objet plat aval, l'axe de poulie est décalé de manière à resserrer la zone de pincement formée par les première et troisième courroies de part et d'autre d'un objet plat amont. Dans sa position pivotée, le volet de séparation chevauche la première courroie. Aussi, pour autoriser cette position, le volet de séparation comporte une découpe rectangulaire apte à recevoir le passage sans frottement de la première courroie. Toutefois, il est fréquent que des objets plats, en particulier lorsqu'ils sont mous, se déforment et se retrouvent ralentis ou coincés par cette encoche, provoquant ainsi un bourrage. De plus, ce volet de séparation n'autorise pas l'utilisation de courroie de pied recevant le chant des objets plats transportés et fiabilisant leur transport.

### Exposé de l'invention

Le but de l'invention est de remédier à ces inconvénients en proposant une machine de tri postal pour objets plats comportant un volet de séparation, permettant le transport fiable des objets plats avec des risques limités de bourrage et de détérioration des objets plats, assurant leur guidage efficace au niveau d'une bifurcation entre une première trajectoire et une seconde trajectoire en limitant les risques de blocage et de bourrage des objets plats en particulier au niveau de cette bifurcation.

A cet effet, l'invention a pour objet une machine de tri postal pour objets plats sur chant comprenant un bâti portant au moins des premiers moyens de convoyage à courroie aptes à transporter les objets plats selon une première trajectoire, au moins un volet de séparation mobile autour d'un axe de pivotement entre une première position dans laquelle il n'interfère pas avec la première trajectoire et une seconde position dans laquelle il coupe la première trajectoire de sorte à diriger les objets plats selon une seconde trajectoire, caractérisée en ce que le volet de séparation comporte un battant solidaire d'une tige de pivotement définissant l'axe de pivotement, ne s'étendant que d'un coté du battant et fixée au bâti de sorte que le volet de pivotement soit suspendu par la tige de pivotement en laissant libre la zone sous le volet de séparation.

L'idée à la base de l'invention est de prévoir un volet de séparation apte à être suspendu de sorte à libérer la zone en-dessous de son axe de pivotement pour permettre le passage, dans cette même zone, d'une courroie de pied. Les objets plats peuvent ainsi, non seulement avoir leurs faces pincées entre deux courroies, mais de plus avoir leur chant porté par une courroie de pied et être dirigés au niveau de la bifurcation par un volet de séparation dont l'axe de pivotement est disposé au plus près des courroies. Ainsi, les zones dans lesquelles les objets plats ne sont pas guidés sont limitées, ce qui réduit d'autant les risques de bourrage.

La machine de tri postal selon l'invention peut avantageusement présenter les particularités suivantes :
- le volet de séparation comporte au moins une encoche s'étendant du bord libre du volet de séparation opposé à l'axe de pivotement vers l'axe de pivotement et destinée, dans au moins l'une des première et seconde positions du volet de séparation à recevoir le passage sans frottement d'au moins une courroie des premiers moyens de convoyage;
- l'encoche du volet de séparation présente au moins un coté oblique disposé en regard de l'axe de pivotement et dont l'extrémité orientée vers la tige de pivotement est plus éloignée de l'axe de pivotement que l'extrémité opposée orientée du coté du battant exempt de tige de pivotement ;
- dans un plan médian du volet de séparation passant par l'axe de pivotement et par le bord libre, le coté oblique est incliné par rapport à l'axe de pivotement, d'un premier angle compris entre 15° et 45° et de préférence sensiblement égal à 30° ;
- selon un plan transversal du volet de séparation sensiblement perpendiculaire au plan médian, le coté oblique définit deux surfaces de glissement disposée en V l'une par rapport à l'autre, la pointe du V étant orientée à l'opposé de l'axe de pivotement, les première et seconde surfaces de glissement étant sensiblement planes et inclinées par rapport au plan médian respectivement d'un premier angle de glissement compris entre 10 et 50° et de préférence sensiblement égal à 30°, et d'un second angle de glissement compris entre 20 et 55° et de préférence sensiblement égal à 42° ;
- l'encoche du volet de séparation est décalée sur le battant, le long du bord libre de sorte à définir une lame et un bec séparés par l'encoche, l'extrémité libre du bec s'étendant au-delà du bord libre de la lame et le bord externe du bec, opposé à l'encoche, étant au moins en partie incliné d'un troisième angle par rapport à l'axe de pivotement de sorte que le bec s'épaississe de sa pointe libre vers sa base ;
- selon le plan médian du volet de séparation passant par l'axe de pivotement et par le bord libre, le battant présente une forme globalement rectangulaire et, selon un plan transversal sensiblement perpendiculaire au plan médian, le volet de séparation présente un profil globalement triangulaire effilé vers le bord libre ;
- les premiers moyens de convoyage comportent au moins une courroie principale et une courroie de pied séparées, selon une direction sensiblement parallèle à l'axe de pivotement, d'une distance prédéterminée agencée pour autoriser le passage sans frottement du bec entre la courroie de pied et la courroie principale lors du pivotement du volet de séparation vers la seconde position ;
- le volet de séparation est traversé par au moins un orifice de détection autorisant le passage de moyens de détection aptes à détecter un bourrage d'objets plats à l'arrière du volet de séparation dans au moins sa première position ;
- la machine de tri postal peut comporter des moyens de motorisation du volet de séparation portés par le bâti.

### Description sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- les figures 1 à 3 sont des vues respectivement en perspective, en élévation et de dessus d'un volet de séparation d'une machine de tri postal selon l'invention ;
- les figures 4 et 5 sont des vues partielles en perspective d'une machine de tri postal selon l'invention représentées avec le volet de séparation respectivement dans ses première et seconde positions et un objet plat circulant au niveau de la bifurcation entre une trajectoire principale et une trajectoire secondaire ;
- les figures 6 et 7 sont des vues partielles de dessus d'une machine de tri postal des figures 4 et 5 représentées avec le volet de séparation respectivement dans les mêmes première et seconde positions, sans objet plat circulant.

### Description des modes de réalisation

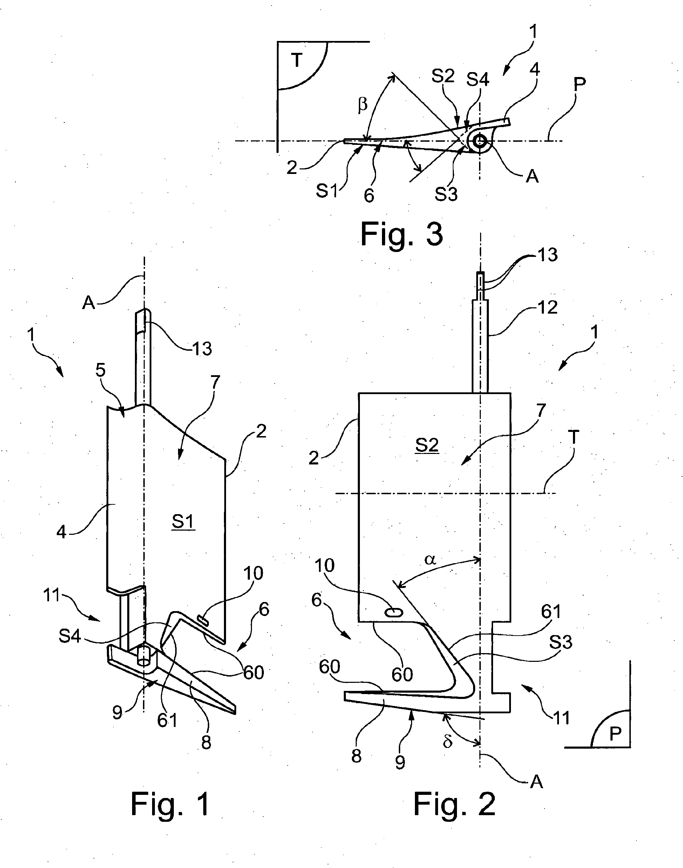

En référence notamment aux figures 1 à 3, le volet de séparation 1 selon l'invention comporte un battant présentant une forme globalement rectangulaire de plan médian P visible sur la figure 2. Selon un plan transversal T, sensiblement perpendiculaire au plan médian P, le battant présente un profil globalement triangulaire visible sur la figure 3. Le volet de séparation 1 est pourvu d'un axe de pivotement A prévu dans la partie large du profil triangulaire, le profil triangulaire étant effilé vers un bord libre 2 du battant, opposé à l'axe de pivotement A. Le plan médian P passe par l'axe de pivotement A et par le bord libre 2 du battant. Les faces opposées du battant définissent des première et seconde surfaces de guidage S1, S2 d'objets plats à convoyer. Le battant est prolongé, au-delà de l'axe de pivotement A, par une aile 4 permettant de garantir un guidage prolongé de la seconde surface de guidage S2 au-delà de l'axe de pivotement A et préservant un dégagement 5 apte à recevoir d'autres éléments mécaniques de la machine de tri postal décrite plus loin. Le battant comporte une encoche 6 débouchant sur le bord libre 2 et s'étendant vers l'axe de pivotement A. La fonction de l'encoche 6 est décrite plus loin. L'encoche 6 présente une forme générale de trapèze dont un coté est formé par le bord libre 2 du battant, deux cotés 60 sensiblement parallèles s'étendent du bord libre 2 perpendiculairement à l'axe de pivotement A et les extrémités des deux côtés 60 sont reliées entre elles par un coté oblique 61 formant une pointe orientée vers l'axe de pivotement A. L'encoche 6 peut avoir toute autre forme adaptée définissant au moins un coté oblique en regard de l'axe de pivotement A et incliné de sorte que l'extrémité du coté oblique orientée vers la tige de pivotement 12 (décrite plus loin) est plus éloignée de l'axe de pivotement A que l'extrémité opposée orientée du coté du battant libre de tige de pivotement.

Dans le plan médian P, le coté oblique 61 de l'encoche 6 est incliné par rapport à l'axe de pivotement A d'un premier angle α (visible sur la figure 2) compris entre 15° et 45° et de préférence sensiblement égal à 30°. De plus, dans l'épaisseur du volet de séparation 1, le coté oblique 61 de l'encoche 6 présente une première et une seconde surfaces de glissement S3, S4 sensiblement planes, disposées en V l'une par rapport à l'autre, la pointe du V étant orientée à l'opposé de l'axe de pivotement. La première surface de glissement S3 est inclinée par rapport au plan médian P, dans le plan transversal T, d'un premier angle de glissement ε compris entre 10 et 50° et de préférence sensiblement égal à 30°. La seconde surface de glissement S4 est inclinée par rapport au plan médian P, dans le plan transversal T, d'un second angle de glissement β compris entre 20 et 55° et de préférence sensiblement égal à 42°.

L'encoche 6 est décalée sur le battant, le long du bord libre 2, de sorte à définir une lame 7 et un bec 8 séparés par l'encoche 6. La longueur de battant au niveau du bec 8 est supérieure à la longueur de battant au niveau de la lame 7. Ainsi, l'extrémité libre du bec 8 s'étend au-delà du bord libre 2 délimitant la lame 7. De plus, le bord externe 9 du bec 8 opposé à l'encoche 6 est incliné par rapport à l'axe de pivotement A d'un troisième angle δ (visible sur la figure 2) compris entre 92 et 115°et de préférence égal à 97°. Ainsi, le bec 8 s'épaissit de sa pointe libre vers sa base située près de l'axe de pivotement A. La fonction de ce bec 8 est décrite plus loin. Le battant est par ailleurs traversé par un orifice de détection 10 autorisant le passage de moyens de détection (non représentés) permettant la détection du bourrage d'objets plats à l'arrière du volet de séparation 1. Ces moyens de détection comportent par exemple un faisceau dont l'interruption prolongée en cas de bourrage déclenche une alarme. Cet orifice de détection 10 présente par exemple une forme oblongue pour autoriser le pivotement du volet de séparation 1 sans interférence intempestive avec les moyens de détection. En regard de l'encoche 6, le volet de séparation 1 comporte un renfoncement 11 apte à recevoir d'autres éléments mécaniques de la machine de tri postal décrite plus loin.

Le volet de séparation 1 comporte en outre une tige de pivotement 12 s'étendant dans le plan médian P, d'un seul coté du battant, et définissant l'axe de pivotement A. La tige de pivotement 12 est par exemple cylindrique, une de ses extrémités étant pourvue de méplats 13 facilitant son raccordement par exemple à un moteur apte à provoquer le pivotement du volet de séparation 1.

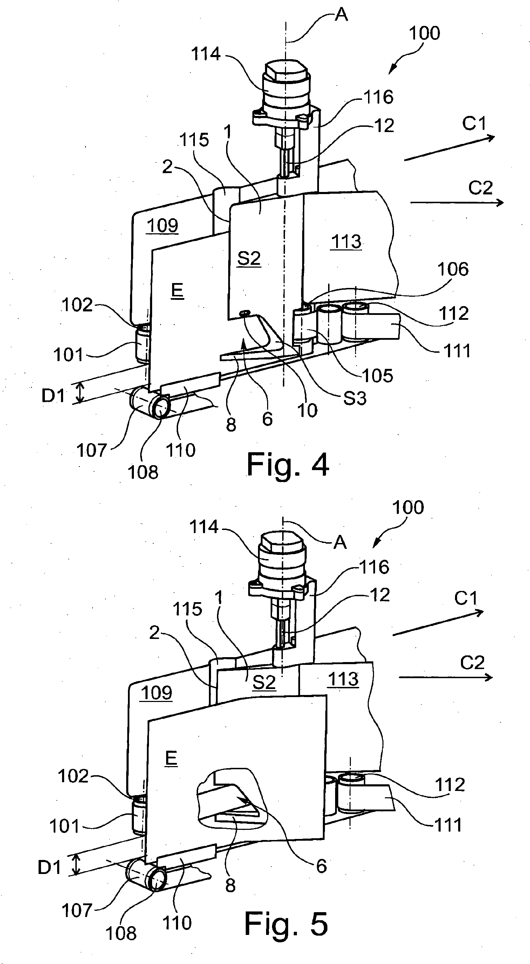

Le volet de séparation 1 selon l'invention est par exemple utilisé dans une machine de tri postal 100, telle que décrite ci-après en référence aux figures 4 à 7 sur lesquelles elle est partiellement représentée et pouvant comporter plusieurs sorties de tri, chaque sortie de tri étant associée à un volet de séparation 1.

La machine de tri postal 100 comporte des premiers moyens de convoyage couplés à des premiers moyens de guidage pour déplacer des objets plats E selon une première trajectoire symbolisée par les flèches C1, et des seconds moyens de convoyage couplés à des seconds moyens de guidage pour déplacer des objets plats E selon une seconde trajectoire symbolisée par les flèches C2 et s'éloignant de la première trajectoire C1 en une bifurcation au niveau de laquelle la machine de tri postal 100 comporte un volet de séparation 1 tel que décrit précédemment.

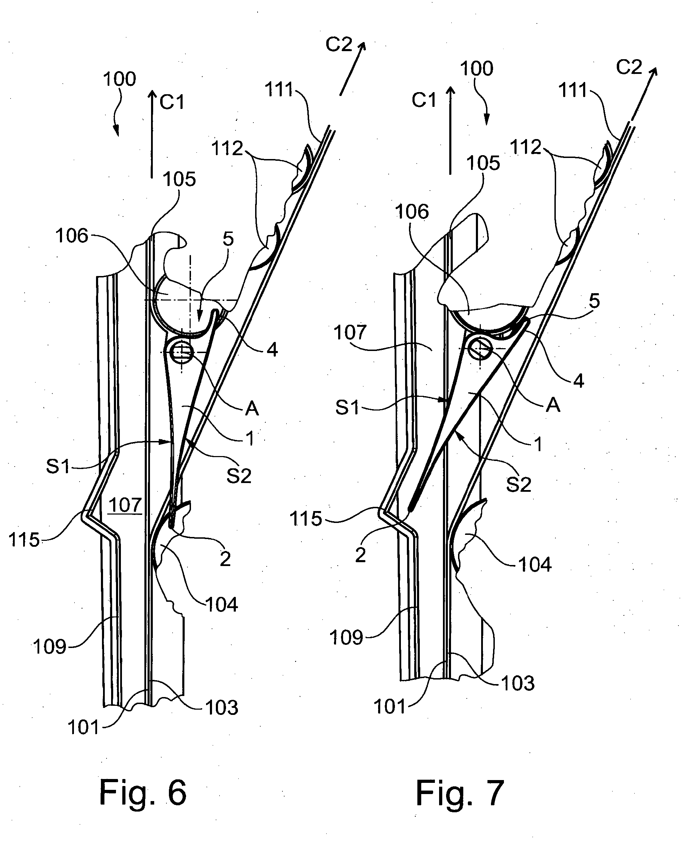

Les premiers moyens de convoyage comportent notamment :
- une courroie principale 101, motorisée, portée par des poulies principales 102 de sorte qu'au moins le brin actif de la courroie principale 101 en contact avec les objets plats E s'étende sensiblement verticalement,
- une première courroie 103 (visible sur les figures 6 et 7), motorisée, portée par des premières poulies 104, et apte, avec la courroie principale 101, à pincer les objets plats E pour les transporter selon la première trajectoire C1 en amont et jusqu'à la bifurcation,
- une seconde courroie 105 (visible sur les figures 6 et 7), motorisée, portée par des secondes poulies 106, et apte, avec la courroie principale 101, à pincer les objets plats E pour les transporter selon la première trajectoire C1 en aval de la bifurcation,
- une courroie de pied 107, motorisée, portée par des poulies de pied 108 (dont l'une est visible sur les figures 4 et 5) de sorte qu'au moins le brin actif de la courroie de pied 107 en contact avec les chants des objets plats E posés dessus s'étendent sensiblement perpendiculairement à la courroie principale 101, à savoir horizontalement.

Comme il ressort de la figure 4, le renfoncement 11 prévu sur le volet de séparation 1 à l'arrière de l'axe de pivotement A, permet de recevoir en partie la seconde poulie 106 amont de sorte que la seconde courroie 105 soit au plus près de la bifurcation pour limiter la zone dans laquelle les objets plats E ne sont pas entrainés par une courroie sur chacune de leurs faces.

Les premiers moyens de guidage comportent notamment une première plaque arrière 109 prévue le long et au-dessus du brin actif de la courroie de pied 107 pour guider les objets plats E sur toute leur hauteur. Les premiers moyens de guidage comportent également un guide avant 110 (visible sur les figures 4 et 5) prévu en regard de la plaque arrière 109, de l'autre coté du passage des objets plats E, pour guider le pied des objets plats E. Les premiers moyens de guidage comportent en outre au moins une première plaque de guidage avant (non représentée) prévue en vis-à-vis de la première plaque arrière 109 et une seconde plaque de guidage avant (non représentée) prévue en vis-à-vis de la première courroie 103. Les poulies principales 102 et de pied 108 sont montées mobiles en rotation par rapport à un support tel qu'un bâti (non représenté), la plaque arrière 109 et le guide avant 110 sont portés par ce même bâti. Les premiers moyens de convoyage et de guidage peuvent bien entendu comporter tout autre élément adapté.

Les seconds moyens de convoyage comportent notamment :
- la première courroie 103 décrite précédemment qui, au niveau de la bifurcation, s'éloigne de la courroie principale 101 selon la seconde trajectoire C2,
- une troisième courroie 111 (visible sur les figures 6 et 7), motorisée, portée par des troisièmes poulies 112, apte avec la première courroie 103, à pincer les objets plats E pour les transporter selon la seconde trajectoire C2 en aval de la bifurcation.

Les seconds moyens de guidage comportent notamment une seconde plaque arrière 113 prévue le long et au-dessus du brin actif de la troisième courroie 111 pour guider les objets plats E sur toute leur hauteur. Les seconds moyens de convoyage et de guidage peuvent bien entendu comporter tout autre élément adapté.

Le volet de séparation 1 est disposé en regard de la courroie principale 101, son axe de pivotement A étant sensiblement vertical. Le volet de séparation 1 est suspendu, par l'intermédiaire de sa tige de pivotement 12, à un support 116 porté par le bâti. Le support 116 porte également un moteur 114 couplé à la tige de pivotement 12 et apte à mobiliser le volet de séparation 1 en pivotement entre une première position (représentée sur les figures 4 et 6) dans laquelle il n'interfère pas avec la première trajectoire C1, et une seconde position (représentée sur les figures 5 et 7) dans laquelle il coupe la première trajectoire C1 de sorte à diriger les objets plats E selon la seconde trajectoire C2.

Dans la première position, l'encoche 6 du volet de séparation 1 reçoit le passage sans frottement de la première courroie 103. Dans cette première position, les objets plats E sont convoyés et guidés selon la première trajectoire C1 :
- avant la bifurcation, par la courroie principale 101, la courroie de pied 107, la première courroie 103, le guide avant 110, la première plaque de guidage avant, la première plaque arrière 109 et tout autre élément de guidage adapté., et
- après la bifurcation, par la courroie principale 101, la seconde courroie 105, la première plaque arrière 109 et tout autre élément de guidage adapté.

Dans la seconde position, l'encoche 6 du volet de séparation 1 reçoit le passage sans frottement de la courroie principale 101. La première plaque arrière 109 comporte une forme en V 115 apte à recevoir le volet de séparation 1 dans sa seconde position.

Dans cette seconde position, les objets plats E sont convoyés et guidés selon la seconde trajectoire C2 :
- avant la bifurcation, par la courroie principale 101, la courroie de pied 107, la première courroie 103, le guide avant 110, la première plaque de guidage avant, la première plaque arrière 109 et tout autre élément de guidage adapté, et
- après la bifurcation, par la première courroie 103, la troisième courroie 111, la seconde plaque de guidage avant, la seconde plaque arrière 113 et tout autre élément de guidage adapté.

Tel qu'il ressort clairement notamment des figures 6 et 7, le fait que la tige de pivotement 12 ne s'étende qu'en partie supérieure du volet de séparation 1 permet de laisser libre la zone opposée à la tige de pivotement 12 sous le battant pour autoriser le passage de la courroie de pied 107 dans cette zone. Il n'y a ainsi aucun risque d'interférence entre l'axe de pivotement A et la courroie de pied 107 ce qui permet de placer l'axe de pivotement A au plus près de la courroie principale 101. La distance D1 séparant la courroie de pied 107 de la courroie principale 101 selon une direction parallèle à l'axe de pivotement A, sera prévue suffisamment grande pour autoriser le passage du bec 8 vers la seconde position du volet de séparation 1, comme illustré par la figure 5. De plus, la forme particulière du bec 8 du volet de séparation 1, plus fine en son extrémité libre qu'en sa base, permet d'assurer ce passage sans interférence ni avec la courroie principale 101 ni avec la courroie de pied 107. De plus, lors du passage de la première à la seconde position et dans les première et seconde positions du volet de séparation 1, la forme spécifique de l'encoche 6, et en particulier les première et seconde surfaces de glissement S3, S4, permettent de limiter les risques de bourrage d'objets plats E. En effet, dans le cas notamment d'objets plats E mous, ces derniers ont tendance à s'avachir sur leur chant, formant parfois un pli parasite qui risque de se coincer dans l'encoche 6 au passage de la bifurcation. Avec le volet de séparation 1 selon l'invention, un tel pli parasite est guidé par le coté oblique 61 de l'encoche 6 et par sa première surface face de glissement S3 ou sa seconde surface de glissement S4 pour être réorienté selon, respectivement, la seconde trajectoire C2, première trajectoire C1, permettant le passage de la bifurcation sans bourrage. Les mêmes avantages se présentent également lorsque l'angle aval inférieur de l'objet plat E se lève par rapport à l'angle inférieur amont, l'objet plat E n'étant alors plus en appui sur tout son chant. Dans cette configuration, le coin aval inférieur de l'objet plat E est guidé respectivement par la première et la seconde surface de glissement S3, S4 tendant à le plaquer contre la courroie de pied 107 et l'orientant selon la seconde, première trajectoire C2, C1.

Il ressort clairement de la description que la machine de tri postal comportant un tel volet de séparation selon l'invention permet de répondre aux problèmes posés et notamment de garantir le convoyage des objets plats, au niveau des bifurcations vers les sorties de tri, en limitant les risques de bourrage et de détérioration des objets plats triés. En effet, la forme particulière du volet de séparation permet de rabattre tout faux pli vers l'objet plat et ainsi d'éviter que ce faux pli ne se coince au niveau de la bifurcation et ne provoque soit un pli définitif de l'objet plat soit un bourrage par coincement et l'arrêt de la machine de tri. De plus, la suspension du volet de séparation permet de placer son axe de pivotement au plus près de la bifurcation et en particulier au-dessus d'une courroie de pied recevant le chant des objets plats et fiabilisant le convoyage. Enfin, la forme particulière du volet de séparation lui permet, lors de son pivotement, de pouvoir passer entre la courroie de pied et une courroie principale sur laquelle le flan des objets plats est en appui.

## Revendications

1. Machine de tri postal (100) pour objets plats (E) sur chant comprenant un bâti (116) portant au moins des premiers moyens de convoyage (101, 107) à courroie aptes à transporter lesdits objets plats (E) selon une première trajectoire (C1), au moins un volet de séparation (1) mobile autour d'un axe de pivotement (A) entre une première position dans laquelle il n'interfère pas avec ladite première trajectoire (C1) et une seconde position dans laquelle il coupe ladite première trajectoire (C1) de sorte à diriger lesdits objets plats (E) selon une seconde trajectoire (C2), **caractérisée en ce que** ledit volet de séparation (1) comporte un battant solidaire d'une tige de pivotement (12) définissant ledit axe de pivotement (A), ne s'étendant que d'un coté dudit battant et fixée audit bâti (116) de sorte que ledit volet de pivotement (1) soit suspendu par ladite tige de pivotement (12) en laissant libre la zone sous ledit volet de séparation (1).

2. Machine de tri postal (100) selon la revendication précédente, **caractérisée en ce que** ledit volet de séparation (1) comporte au moins une encoche (6) s'étendant du bord libre (2) dudit volet de séparation (1) opposé audit axe de pivotement (A) vers ledit axe de pivotement (A) et destinée, dans au moins l'une desdites première et seconde positions dudit volet de séparation (1) à recevoir le passage sans frottement d'au moins une courroie (101) desdits premiers moyens de convoyage.

3. Machine de tri postal (100) selon la revendication précédente, caractérisée en ce en ce que ladite encoche (6) dudit volet de séparation (1) présente au moins un coté oblique (61) disposé en regard dudit axe de pivotement (A) et dont l'extrémité orientée vers ladite tige de pivotement (12) est plus éloignée dudit axe de pivotement (A) que l'extrémité opposée orientée du coté dudit battant exempt de tige de pivotement.

4. Machine de tri postal (100) selon la revendication 3, **caractérisée en ce que** dans un plan médian (P) dudit volet de séparation (1) passant par ledit axe de pivotement (A) et par ledit bord libre (2), ledit coté oblique (61) est incliné par rapport audit axe de pivotement (A), d'un premier angle (α) compris entre 15 et 45° et de préférence sensiblement égal à 30°.

5. Machine de tri postal (100) selon la revendication 3, **caractérisée en ce que** selon un plan transversal (T) dudit volet de séparation (1) sensiblement perpendiculaire audit plan médian (P), ledit coté oblique (61) définit une première et une seconde surfaces de glissement (S3, S4) disposées en V l'une par rapport à l'autre, la pointe du V étant orientée à l'opposé dudit axe de pivotement, lesdites première et seconde surfaces de glissement (S3, S4) étant sensiblement planes et inclinées par rapport audit plan médian (P) respectivement d'un premier angle de glissement (ε) compris entre 10 et 50° et de préférence sensiblement égal à 30°, et d'un second angle de glissement (β)compris entre 20 et 55° et de préférence sensiblement égal à 42°.

6. Machine de tri postal (100) selon au moins la revendication 2, **caractérisée en ce que** ladite encoche (6) dudit volet de séparation (1) est décalée sur ledit battant, le long dudit bord libre (2) de sorte à définir une lame (7) et un bec (8) séparés par ladite encoche (6), l'extrémité libre dudit bec (8) s'étendant au-delà du bord libre (2) de ladite lame (7) et le bord externe (9) dudit bec (8), opposé à ladite encoche (6), étant au moins en partie incliné d'un troisième angle (δ) par rapport audit axe de pivotement (A) de sorte que ledit bec (8) s'épaississe de sa pointe libre vers sa base.

7. Machine de tri postal (100) selon au moins l'une des revendications précédentes, **caractérisée en ce que** selon le plan médian (P) dudit volet de séparation (1) passant par ledit axe de pivotement (A) et par ledit bord libre (2), ledit battant présente une forme globalement rectangulaire et que, selon un plan transversal (T) sensiblement perpendiculaire audit plan médian (P), ledit volet de séparation (1) présente un profil globalement triangulaire effilé vers ledit bord libre (2).

8. Machine de tri postal (100) selon au moins la revendication 6, **caractérisée en ce que** lesdits premiers moyens de convoyage comportent au moins une courroie principale (101) et une courroie de pied (107) séparées, selon une direction sensiblement parallèle audit axe de pivotement (A), d'une distance (D1) prédéterminée agencée pour autoriser le passage sans frottement dudit bec (8) entre ladite courroie de pied (107) et ladite courroie principale (101) lors du pivotement dudit volet de séparation (1) vers ladite seconde position.

9. Machine de tri postal (100) selon au moins l'une des revendications précédentes, **caractérisée en ce que** ledit volet de séparation (1) est traversé par au moins un orifice de détection (10) autorisant le passage de moyens de détection aptes à détecter un bourrage d'objets plats (E) à l'arrière dudit volet de séparation (1) au moins dans sa première position.

10. Machine de tri postal (100) selon au moins l'une des revendications précédentes, **caractérisée en ce que** qu'elle comporte des moyens de motorisation dudit volet de séparation (1) portés par ledit bâti (116).

## Patentansprüche

1. Postsortiermaschine (100) für flache Gegenstände (E) auf Kante, umfassend ein Gestell (116), das wenigstens erste Bandfördermittel (101, 107) trägt, die in der Lage sind, die flachen Gegenstände (E) gemäß einer ersten Bahn (C1) zu transportieren, wenigstens eine Trennklappe (1), die um eine Schwenkachse (A) zwischen einer ersten Position, in der sie mit der ersten Bahn (C1) nicht interferiert, und einer zweiten Position, in der sie die erste Bahn (C1) derart kreuzt, dass die flachen Gegenstände (E) gemäß einer zweiten Bahn (C2) geleitet werden, beweglich ist,
**dadurch gekennzeichnet,**
**dass** die Trennklappe (1) einen mit einem Flügel einstückigen Schwenkzapfen (12) umfasst, der die Schwenkachse (A) definiert, welcher sich nur einerseits des Flügels erstreckt und der an dem Gestell (116) derart befestigt ist, dass die Schwenkklappe (1) durch den Schwenkzapfen (12) aufgehängt ist und einen Bereich unter der Trennklappe (1) freilässt.

2. Postsortiermaschine (100) nach dem vorhergehenden Anspruch, **dadurch gekennzeichnet, dass** die Trennklappe (1) wenigstens eine Ausnehmung (6) umfasst, die sich von dem der Schwenkachse (A) abgekehrten freien Rand (2) der Trennklappe (1) zu der Schwenkachse (A) erstreckt und dazu bestimmt ist, in wenigstens einer der ersten und zweiten Positionen der Trennklappe (1) den Durchgang ohne Reibung wenigstens eines Bandes (101) der ersten Fördermittel aufzunehmen.

3. Postsortiermaschine (100) nach dem vorhergehenden Anspruch, **dadurch gekennzeichnet, dass** die Ausnehmung (6) der Trennklappe (1) wenigstens eine gegenüberliegend der Schwenkachse (A) angeordnete schräge Seite (61) aufweist, deren dem Schwenkzapfen (12) zugekehrtes Ende weiter von der Schwenkachse (A) entfernt ist als das zu der Seite des Flügels ohne Schwenkachse weisende entgegengesetzte Ende.

4. Postsortiermaschine (100) nach Anspruch 3, **dadurch gekennzeichnet, dass** in einer durch die Schwenkachse (A) und durch den freien Rand (2) hindurchgehende mittleren Ebene (P) der Trennklappe (1) die schräge Seite (61) gegenüber der Schwenkachse (A) um einen ersten Winkel (α) geneigt ist, der zwischen 15° und 45° eingeschlossen ist und vorzugsweise im Wesentlichen 30° beträgt.

5. Postsortiermaschine (100) nach Anspruch 3, **dadurch gekennzeichnet, dass** gemäß einer zu der mittleren Ebene (P) im Wesentlichen senkrechten Querebene (T) der Trennklappe (1) die schräge Seite (61) erste und zweite Gleitflächen (S3, S4) definiert, die V-förmig zueinander angeordnet sind, wobei die Spitze des V entgegengesetzt zu der Schwenkachse orientiert ist, wobei die ersten und zweiten Gleitflächen (S3, S4) im Wesentlichen eben und in Bezug auf die mittlere Ebene (P) um jeweils einen ersten Gleitwinkel (ε), der zwischen 10° und 50° eingeschlossen ist und vorzugsweise im Wesentlichen 30° beträgt, und um einen zweiten Gleitwinkel (β), der zwischen 20° und 55° eingeschlossen ist und vorzugsweise im Wesentlichen 42° beträgt, geneigt sind.

6. Postsortiermaschine (100) nach wenigstens Anspruch 2, **dadurch gekennzeichnet, dass** die Ausnehmung (6) der Trennklappe (1) entlang des freien Randes (2) von dem Flügel versetzt ist derart, um eine Klinge (7) und ein Zacken (8), welche durch die Ausnehmung (6) getrennt sind, zu definieren, wobei das freie Ende des Zackens (8) sich jenseits des freien Rands (2) der Klinge (7) erstreckt, wobei der der Ausnehmung (6) entgegengesetzte äußere Rand (9) des Zackens (8) wenigstens teilweise um einem dritten Winkel (δ) gegenüber der Schwenkachse (A) geneigt ist derart, dass der Zacken (8) sich von seiner freien Spitze zu seiner Basis hin verbreitert.

7. Postsortiermaschine (100) nach einem der vorhergehenden Ansprüche, **dadurch gekennzeichnet, dass** gemäß der durch die Schwenkachse (A) und durch den freien Rand (2) hindurchgehende mittleren Ebene (P) der Trennklappe (1) der Flügel eine weitgehend rechteckige Form aufweist, und dass gemäß einer zu der mittleren Ebene (P) im Wesentlichen senkrechten Querebene (T) die Trennklappe (1) ein weitgehend dreieckiges, zu dem freien Rand (2) spitz zulaufendes Profil aufweist.

8. Postsortiermaschine (100) gemäß zumindest Anspruch 6, **dadurch gekennzeichnet, dass** die ersten Fördermittel wenigstens ein Hauptband (101) und ein Unterband (107) umfassen, die gemäß einer im Wesentlichen zu der Schwenkachse (A) parallelen Richtung um einen vorbestimmten Abstand (D1) getrennt sind, der ausgebildet ist, um den Durchgang ohne Reibung des Zackens (8) zwischen dem Unterband (107) und dem Hauptband (101) bei der Verschwenkung der Trennklappe (1) zu der zweiten Position zuzulassen.

9. Postsortiermaschine (100) nach wenigstens einem der vorhergehenden Ansprüche, **dadurch gekennzeichnet, dass** die Trennklappe (1) durch wenigstens eine Erfassungsöffnung (10) durchsetzt ist, die den Durchgang von Erfassungsmitteln zulässt, die in der Lage sind, eine Stauung flacher Gegenstände (E) hinter der Trennklappe (1) zumindest in ihrer ersten Position zu erfassen.

10. Postsortiermaschine (100) nach wenigstens einem der vorhergehenden Ansprüche, **dadurch gekennzeichnet, dass** sie Antriebsmittel der Trennklappe (1) umfasst, die von dem Gestell (116) getragen sind.

## Claims

1. A postal sorting machine (100) for flat articles (E) on edge, said machine comprising a frame (116) carrying at least first belt conveyor means (101, 107) suitable for conveying said flat articles (E) along a first path (C1), at least one separator flap (1) mounted to move about a pivot axis (A) between a first position in which it does not interfere with said first path (Cl) and a second position in which it intersects said first path (Cl) so as to direct said flat articles (E) along a second path (C2), **characterized in that** said separator flap (1) comprises a vane secured to or integral with a pivot rod (12), which pivot rod defines said pivot axis (A), and extends on one side of said flap only and is fastened to said frame (116) so that said pivot flap (1) is suspended by said pivot rod (12) while the zone under said separator flap (1) is left free.

2. A postal sorting machine (100) according to the preceding claim, **characterized in that** said separator flap (1) is provided with at least one notch (6) extending from the free edge (2) of said separator flap (1) that is opposite from said pivot axis (A) towards said pivot axis (A) and designed, when said separator flap (1) is in at least one of said first and second positions, to receive at least one belt (101) of said first conveyor means so that said belt passes through it without any friction.

3. A postal sorting machine (100) according to the preceding claim, **characterized in that** said notch (6) in said separator flap (1) has at least one slanting side (61) disposed facing said pivot axis (A) and having its end that points towards the pivot rod (12) further away from said pivot axis (A) than its opposite end that points towards the side of said vane that is free of the pivot rod.

4. A postal sorting machine (100) according to claim 3, **characterized in that**, in a midplane (P) of said separator flap (1) that contains said pivot axis (A) and said free edge (2), said slanting side (61) is inclined relative to said pivot axis (A) at a first angle (α) lying in the range 15° to 45°, and preferably substantially equal to 30°.

5. A postal sorting machine (100) according to claim 3, **characterized in that**, in a transverse plane (T) of said separator flap (1) that is substantially perpendicular to said midplane (P), said slanting side (61) defines first and second slide surfaces (S3, S4) that are disposed in a V-shaped configuration relative to each other, the tip of the V-shape pointing away from said pivot axis, said first and second slide surfaces (S3, S4) being substantially plane and inclined relative to said midplane (P) respectively at a first slide angle (ε) lying in the range 10° to 50° and preferably substantially equal to 30°, and at a second slide angle (β) lying in the range 20° to 55° and preferably substantially equal to 42°.

6. A postal sorting machine (100) according to claim 2, **characterized in that** said notch (6) in said separator flap (1) is offset on said vane, along said free edge (2) so as to define a blade (7) and a prong (8) separated by said notch (6), the free end of said prong (8) extending beyond the free edge (2) of said blade (7), and the outer edge (9) of said prong (8) that faces away from said notch (6) being inclined at least in part at a third angle (δ) relative to said pivot axis (A) so that said prong (8) thickens going from its free tip towards its base.

7. A postal sorting machine (100) according to any preceding claim, **characterized in that**, in the midplane (P) of said separator flap (1) that contains said pivot axis (A) and said free edge (2), said vane is rectangular in overall shape, and **in that**, in a transverse plane (T) that is substantially perpendicular to said midplane (P), said separator flap (1) has a profile that is triangular in overall shape, tapering towards the free edge (2).

8. A postal sorting machine (100) according to at least claim 6, **characterized in that** said first conveyor means comprise at least one main belt (101) and a foot belt (107) that are separated from each other, in a direction that is substantially parallel to said pivot axis (A), by a predetermined distance (D1) arranged to allow said prong (8) to pass without any friction between said foot belt (107) and said main belt (101) while said separator flap (1) is pivoting towards said second position.

9. A postal sorting machine (100) according to at least one of the preceding claims, **characterized in that** said separator flap (1) is provided with at least one through detection orifice (10) allowing detection means to pass through that are suitable for detecting a jam of flat articles (E) behind said separator flap (1), at least when said flap is in its first position.

10. A postal sorting machine (100) according to at least one of the preceding claims, **characterized in that** it further comprises motor-drive means for driving said separator flap (1), which motor-drive means are carried by said frame (116).
